(19)

Europäisches
Patentamt
European
Patent Office
Office européen
des brevets

(11) **EP 2 122 332 B1**

(12) **EUROPEAN PATENT SPECIFICATION**

(45) Date of publication and mention
of the grant of the patent:
**17.10.2012 Bulletin 2012/42**

(21) Application number: **08717443.9**

(22) Date of filing: **05.03.2008**

(51) Int Cl.:
**G01N 21/65** (2006.01)

(86) International application number:
**PCT/EP2008/052695**

(87) International publication number:
**WO 2008/107465 (12.09.2008 Gazette 2008/37)**

(54) **An ensemble method and apparatus for classifying materials and quantifying the composition of mixtures**

Ensemble-verfahren und Vorrichtung zur Klassifizierung von Materialien und Quantifizierung der Zusammensetzung von Gemischen

Ensemble de procédé et d'appareil pour la classification de matériaux et la quantification de la composition de mélanges

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.03.2007 EP 07103535**

(43) Date of publication of application:
**25.11.2009 Bulletin 2009/48**

(73) Proprietor: **National University of Ireland, Galway Galway (IE)**

(72) Inventors:
• **HENNESSY, Kenneth**
  **Galway (IE)**
• **MADDEN, Michael Gerard**
  **Co. Galway (IE)**
• **RYDER, Alan George**
  **Galway (IE)**
• **HOWLEY, Tom**
  **Galway (IE)**

(74) Representative: **Catesby, Olivia Joanne et al**
**Tomkins & Co**
**5 Dartmouth Road**
**Dublin 6 (IE)**

(56) References cited:
**EP-A- 1 329 716        WO-A-01/53804**

CA-A1- 2 466 792        US-A- 6 118 850
US-A1- 2006 043 300

• **HENNESSY K ET AL: "An improved genetic programming technique for the classification of Raman spectra" KNOWLEDGE-BASED SYSTEMS, ELSEVIER, vol. 18, no. 4-5, August 2005 (2005-08), pages 217-224, XP004982889 ISSN: 0950-7051**
• **MADDEN M G ET AL: "The effect of principal component analysis on machine learning accuracy with high-dimensional spectral data" KNOWLEDGE-BASED SYSTEMS ELSEVIER UK, vol. 19, no. 5, September 2006 (2006-09), pages 363-370, XP002444468 ISSN: 0950-7051**
• **LEGER MARC N ET AL: "Comparison of derivative preprocessing and automated polynomial baseline correction method for classification and quantification of narcotics in solid mixtures" APPL SPECTROSC; APPLIED SPECTROSCOPY FEBRUARY 2006, vol. 60, no. 2, February 2006 (2006-02), pages 182-193, XP009087412**
• **O'CONNELL M -L ET AL: "Classification of a target analyte in solid mixtures using principal component analysis, support vector machines, and Raman spectroscopy" PROCEEDINGS OF THE SPIE - THE INTERNATIONAL SOCIETY FOR OPTICAL ENGINEERING SPIE-INT. SOC. OPT. ENG USA, vol. 5826, no. 1, 2005, pages 340-350, XP002444469 ISSN: 0277-786X**

**Description**

**Field of the Invention**

The present invention relates to the quantitative and qualitative analysis of systems or materials based on machine learning analysis of spectroscopic data. The term 'spectroscopic data' here includes techniques such as FT-IR absorption; Raman; NIR absorption; Fluorescence; NMR etc.

**Background to the Invention**

An application of this invention to spectroscopic data involves its use in Raman spectroscopy. Raman spectroscopy has historically been used to obtain vibrational spectroscopic data from a large number of chemical systems. Its versatility, due to ease of sampling via coupling to fibre optics and microscopes, allied to the ability to sample through glass, has made it a very practical technique for use by law enforcement agencies in the detection of illicit materials. It also has the highly desirable properties of being non-invasive, non-destructive and very often highly selective. The analytical applications of Raman Spectroscopy continue to grow and typical applications are in structure determination, multi-component qualitative analysis and quantitative analysis.

The Raman spectrum of a target analyte may be compared against reference spectra of known substances to identify the presence of the analyte. For more complex (or poorly resolved) spectra, the process of identification is more difficult. The current norm is to develop test sets of known samples and use chemometric methods such as Principal Component Analysis (PCA) and multivariate regression to produce statistical models to classify and/or quantify the analyte from the spectroscopic data. These statistical based models are however, limited in performance for complex systems that have poorly resolved peaks and/or comprise complex mixtures.

Machine Learning techniques offer more robust methods to overcome these problems. These techniques have been successfully employed in the past to identify and quantify compounds from other spectroscopy areas, such as, use of neural networks to identify bacteria from their IR Spectra and neural networks to classify plant extracts from their mass spectra.

There are very few machine learning packages on the market specifically dedicated to analysing spectra. Gmax-bio (Aber Genomic Computing) is designed for use in many scientific areas including spectroscopy. It uses genetic programming to evolve solutions to problems. It is claimed by its developers to outperform most other machine learning techniques, however due to its diverse problem applicability, the user requires some prior knowledge of both genetic programming and spectroscopy. Neurodeveloper (Synthon GmBH) is designed specifically for the analysis of spectra and uses chemometric tools, pre-processing techniques and neural networks for the deconvolution of spectra.

Recent advances in machine learning have led to new techniques capable of outperforming these chemometric methods.

US 6,675,137 and US 5,822,219 disclose the use of PCA for spectral analysis. US 6,415,233, US 6,711,503 and US 6,096,533 disclose the use of Partial Least Squares (PLS) and classical least squares techniques, and hybrids of these techniques, for spectral analysis. US 5,631,469 discloses the use of Artificial Neural Networks (ANNs) and spectral data for the analysis of organic materials and structures. US 5,553,616 discloses the use of a particular implementation of the ANN to determine the concentrations of biological substances from Raman spectral data. The ANN implementation employs fuzzy Adaptive Resonance Theory-Mapping (ARTMAP).

US 5,660,181 discloses the use of ANNs in combination with Principal Component Analysis (PCA) to classify spectral data. US 5,900,634 discloses the use of an ANN for the real-time analysis of organic and non-organic compounds. US 5,218,529, US 6,135,965 and US 6,477,516 also disclose the use of ANNs for spectroscopic analyses. US 6,421,553 discloses a system for classifying spectral data based on the distance of a test sample from set of training samples (of known condition). The test sample is classified based on a distance relationship with at least two samples, provided that at least one distance is less than a predetermined maximum distance. The preferred embodiment of this method uses the Mahalanobis distance, but the Euclidean distance is also considered. US 6,427,141 discloses a system for enhancing knowledge discovery using multiple support vector machines.

A limitation of existing techniques based on ANNs and SVMs, is that they produce predictions is that they are not particularly amenable to interpretation. Hence, they are often viewed as 'black box' techniques, whereas analysts who inspect spectra manually would classify them based on the position and size of peaks. As such, experts of the domain (e.g. analytical chemists) are at a disadvantage in that they are provided with no insight into the classification models used or the data under analysis. ANNs are a popular patented machine learning technique for classification of spectra. It is an aim of the invention to improve the clarity of ANN decision processes while not adversely affecting the classification accuracy. An improvement over other machine learning techniques such as SVM is also desirable.

It is also an aim of the invention to provide a classification method which is robust to noise, removing the need for spectral pre-processing techniques such as those described in United States Patents: US 4,783,754, US 5,311,445, US 5,435,309, US 5,652,653, US 6,683,455 and US 6,754,543.

Software in the area of spectral analysis can be broken into four main areas:

- Software that carries out library searches of databases to match spectral features
- Software that processes spectra using standard mathematical and statistical tools
- General statistical packages that could be used to model and quantify spectra
- Software that is commercially available that utilises machine learning techniques to classify and quantify spectra.

It is envisioned that, as a machine learning technique, software utilising the method of the invention technique would be in direct competition with the final group above.

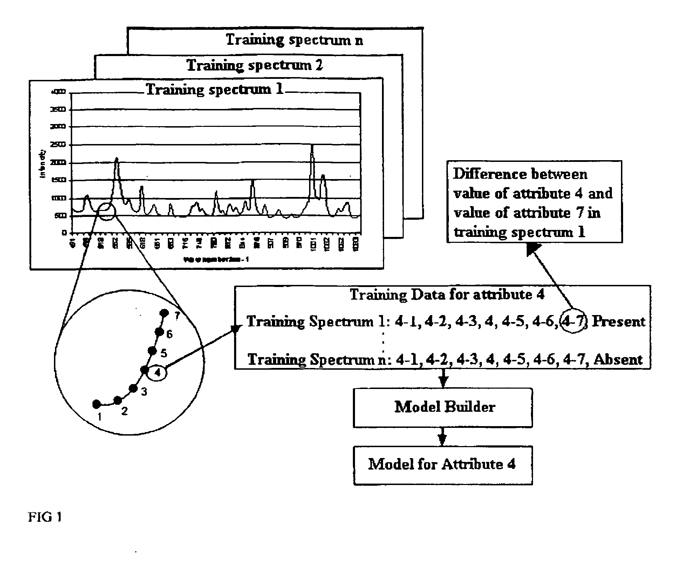

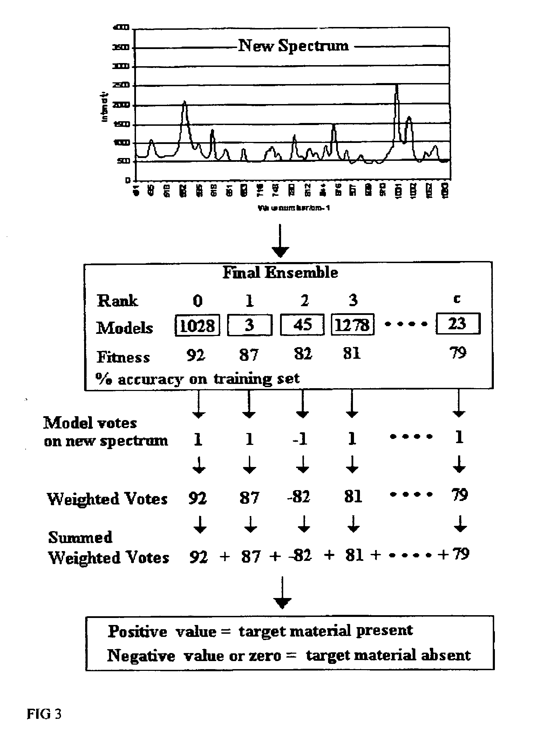

CA 2 466 792 (Figs. 1, 3) discloses a method and apparatus for collecting spectra by NMR, mass spectrometry, infrared and RAMAN of e.g. biological molecules associating spectra of a training set based on the attributes of at least two spectral parameters with at least two categories, scoring parameters of spectra and comparing parameters of sample spectra to scored spectral parameters so as to classify sample spectra into one of categories. The comparing of the spectral parameters of the sample NMR spectra to the scored spectral parameters of the training set uses a statistical approach. The spectral parameters may include chemical shift, ratio of observed peaks to expected peaks, or peak intensity.

CA 2 466 792 teaches that a series of attributes such as peak location, peak width of one or more peaks in the spectrum can be taken to define, with the plurality of obtained training spectra in step 110, attributes "A", "X" to "M" of a category (classification) 1 (indicating a particular substance 1) and a series of attributes "B", "Y", "N" of a category (classification) 2 (indicating a particular substance 2) and so on. These attributes are then "scored" using a processor whereby the score is a measure of the reliability of the attribute for predicting the category (step 130). In a subsequent step 140 the spectral attributes of a sample spectrum are compared with the attributes of the categories (classifications) to determine via the scores to which category (classification) the sample belongs on the basis of the attributes of its spectrum (step 150).

As shown in all boxes in Fig. 1 of CA 2 466 792, the above technique uses a series of spectral attributes i.e. spectral parameters at a plurality of wavelengths to determine how to define category 1, 2 etc and also to determine the category of the unknown sample spectrum. Similarly CA 2 466 792, Fig. 3 discloses that a set of "optimal attributes" i.e. plural wavelengths of a given spectrum is used in determining the category (class) membership probability.

## Object of the Invention

It is an object of the invention to provide a method and apparatus capable of increasing the clarity and accuracy of ML classification and regression decisions, including those using ANN and SVM methods, in relation to Raman spectral analysis, related spectroscopic techniques, and more generally any form of univariate sequential data. Examples of univariate sequential data includes spectroscopic data, acoustic data and seismic data.

## Summary of the Invention

There is a need for a machine learning technique that has been tailored for spectral analysis through exploiting the sequential nature of the spectral data.

In the following description and accompanying claims, each frequency (or wavenumber) of a spectrum is referred to as an *attribute* or *spectral attribute.* Likewise, the intensity recorded at a particular frequency in a spectrum is referred to as the *value of the attribute* or the *value of the spectral attribute.*

According to the invention, there is provided a method of generating models as defined by the appended claims.

In other words, for each chosen wavelength: the method comprises correlating the determined attribute values at said chosen wavelength to build a model for said attributes.

There is further disclosed a method of generating models with which to classify or quantify spectra of unknown mixtures of compounds, the method comprising the steps of:

   providing a training set of training spectra, each spectrum representing a mixture of known compounds and each having a plurality of spectral attributes, each at a different wavelength,
   determining at least the value of each spectral attribute in each training spectrum,
   correlating the attribute values of all attributes in the training set having a particular wavelength to build a model for said attributes at said particular wavelength.

This method may further comprise the additional steps of determining the aspect of each spectral attribute in each training spectrum, where the aspect of each attribute is its position in relation to the surrounding spectrum; and correlating the aspect of all attributes in the training set having said particular wavelength when building said model.

Preferably, the step of determining the aspect of each attribute comprises the step of calculating the difference in value between the value of the attribute and the value of at least one preceding or subsequent attribute.

It should be noted that the term correlating when used herein with reference to the building of a model encompasses combining, collecting, collating, gathering and similar.

According to the disclosure there is provided a method of classifying the spectrum of a mixture of unknown compounds comprising the steps of:

providing a plurality of models, each model generated using either of the above-mentioned method of generating models with which to classify or quantify spectra of unknown mixtures of compounds,
calculating the fitness of each model based on its accuracy in classifying the training set upon which it was built,
selecting at least one of said plurality of models to classify the spectrum of said mixture of unknown compounds, each model having been built using the spectral attributes at a particular wavelength from each spectrum in said training set,
identifying which attribute in the spectrum of said mixture of unknown compounds has said particular wavelength, and inputting said identified attribute into said at least one selected model to generate a class prediction for said mixture of unknown compounds.

Preferably, the step of selecting at least one of said plurality of models comprises selecting a percentage of the models which most accurately classified the training set. Preferably the step of selecting a percentage of the models which most accurately classified the training set comprises calculating the fitness of each model based on its accuracy in correctly classifying the training set, ranking the models according to their fitness; and selecting a percentage of the top ranking models. Preferably, the method of calculating the fitness of each model comprises the steps of allocating an accuracy value for each spectrum in the training set; and correlating said accuracy values to provide an integer fitness value for the model. Each model's class prediction may be weighted by the model's fitness value. Preferably the method further comprises summing the weighted class prediction of the selected models.

It should be noted that the term correlating when used herein with reference to accuracy values means summarising by combining.

According to the disclosure there is provided a method of quantifying the spectrum of a mixture of unknown compounds to determine concentrations therein, the method comprising the steps of:

providing a plurality of models, each model generated using an aforementioned method of generating models with which to classify or quantify spectra of unknown mixtures of compounds (according to the first aspect of the invention), selecting at least one of said plurality of models to quantify the spectrum of said mixture of unknown compounds, said at least one model having been built using the spectral attributes at a particular wavelength from each spectrum in said training set,
identifying which attribute in the spectrum of said mixture of unknown compounds has said particular wavelength, and inputting said identified attribute into said at least one selected model to generate a concentration prediction for said mixture of unknown compounds.

Preferably the step of selecting at least one of said plurality of models comprises selecting a percentage of the models which most accurately quantified the training set. Preferably the step of selecting a percentage of the models which most accurately quantified the training set comprises: calculating the fitness of each model based on its accuracy in correctly quantifying the training set; ranking the models according to their fitness; and selecting a percentage of the top ranking models.

The method of calculating the fitness of each model preferably comprises the steps of allocating an accuracy value for each spectrum in the training set; and correlating said accuracy values to provide an integer fitness value for the model. The step of generating a concentration prediction for said mixture of unknown compounds may comprise calculating the mean average of the concentration predictions from each of said at least one selected models.

According to the invention there is provided a system for generating models as defined by the appended claims.

There is further disclosed a system for generating models with which to classify or quantify spectra of unknown mixtures of compounds, comprising:

a storage device for storing a training set of training spectra, each spectrum representing a mixture of known compounds and each having a plurality of spectral attributes, each at a different wavelength,
a processor operable for:

providing a training set of training spectra, determining at least the value of each spectral attribute in each training spectrum,
correlating the attribute values of all attributes in the training set having a particular wavelength to build a model for said attributes at said particular wavelength.

This system preferably further comprises means for determining the aspect of each spectral attribute in each training spectrum, where the aspect of each attribute is its position in relation to the surrounding spectrum; and means for correlating the aspect of all attributes in the training set having said particular wavelength when building said model. Preferably the means for determining the aspect of each attribute comprises means for calculating the difference in value between the value of the attribute and the value of at least one preceding or subsequent attribute.

According to the disclosure there is provided a system for classifying the spectrum of a mixture of unknown compounds comprising:

means for providing a plurality of models, each model generated using the aforementioned method of generating models with which to classify or quantify spectra of unknown mixtures of compounds (according to the invention),
means for calculating the fitness of each model based on its accuracy in classifying the training set upon which it was built,
means for selecting at least one of said plurality of models to quantify the spectrum of said mixture of unknown compounds, said at least one model having been built using the spectral attributes at a particular wavelength from each spectrum in said training set,
means for identifying which attribute in the spectrum of said mixture of unknown compounds has said particular wavelength, and
means for inputting said identified attribute into said at least one selected model to generate a concentration prediction for said mixture of unknown compounds.

Preferably, the means for selecting at least one of said plurality of models comprises means for selecting a percentage of the models which most accurately classified the training set. Preferably, the means for selecting a percentage of the models which most accurately classified the training set comprises means for calculating the fitness of each model based on its accuracy in correctly classifying the training set; means for ranking the models according to their fitness; and means for selecting a percentage of the top ranking models.

The means for calculating the fitness of each model may further comprise means for allocating an accuracy value for each spectrum in the training set; means for correlating said accuracy values to provide an integer fitness value for the model. Each model's class prediction may be weighted by the model's fitness value. The system may further comprise means for summing the weighted class prediction of the selected models.

According to the disclosure there is provided a system for quantifying the spectrum of a mixture of unknown compounds to determine concentrations therein, comprising:

means for providing a plurality of models, each model generated using the aforementioned method of generating models with which to classify or quantify spectra of unknown mixtures of compounds (according to the invention),
means for selecting at least one of said plurality of models to quantify the spectrum of said mixture of unknown compounds, said at least one model having been built using the spectral attributes at a particular wavelength from each spectrum in said training set,
means for identifying which attribute in the spectrum of said mixture of unknown compounds has said particular wavelength, and
means for inputting said identified attribute into said at least one selected model to generate a concentration prediction for said mixture of unknown compounds.

Preferably, the means for selecting at least one of said plurality of models comprises means for selecting a percentage of the models which most accurately quantified the training set. Preferably, the means for selecting a percentage of the models which most accurately quantified the training set comprises means for calculating the fitness of each model based on its accuracy in correctly quantifying the training set; means for ranking the models according to their fitness; and means for selecting a percentage of the top ranking models. The means for calculating the fitness of each model preferably comprises means for allocating an accuracy value for each spectrum in the training set; and means for correlating said accuracy values to provide an integer fitness value for the model. The means for generating a concentration prediction for said mixture of unknown compounds may comprises means for calculating the mean average of the concentration predictions from each of said at least one selected models.

The disclosure further provides a method of classifying a test spectrum of a target material, the method comprising the steps of:

providing a training set of n samples with m variables/attributes;
building a model for each attribute across all n samples;
allowing a percentage of the top ranking models to vote on the class of a test spectrum of a target material;
weighting each model's vote based on its classification accuracy on said training set; and
determining the composition of the target material based on a consensus from said top ranking models,

The method may further comprise calculating the fitness of each model built, based on its classification performance on the training set; and ranking the models according to their fitness.

The step of building a model for each attribute may comprise a) generating training data for each attribute in the first training spectrum; b) repeating step (a) for each training spectrum in the training set; and (c) using the training data generated from each training spectrum to build a model for each attribute.

The step of generating training data of each attribute may comprise calculating its value; its aspect, where its aspect is its position in relation to the surrounding spectrum; and its class value (presence/absence) of the training spectrum. The step of calculating the aspect of an attribute may comprise the step of calculating the relationship between the value of the attribute and the value of at least one preceding or subsequent attribute.

The method of calculating the fitness of each model based on its performance on the training set may comprise the steps of allocating an accuracy value for each spectrum in the training set, and performing a calculation on the accuracy values in a to provide an integer fitness value for a model. It will be appreciated that alternative methods of calculating the fitness of a model or other methods of assessing the ability of the model may be employed.

The step of allowing a percentage of the top ranking models to predict an unknown sample may comprise determining which attribute in the training spectra each model was built build from; giving the corresponding attribute and aspect data from a test spectrum to each of the top ranking models; and using weighted voting of the top ranked models for an unknown spectrum.

The step of weighting each model's vote based on its fitness may comprise multiplying each model's vote by the model's fitness value in classification. The step of classifying the data based on the majority vote of the chosen models may then comprise summing the weighted votes of the chosen models. The step of determining the composition of the target material may further comprise basing this determination on the majority weighted vote of the top chosen models in classification.

The disclosure further provides a method of quantifying a test spectrum of a target material, comprising the steps of:

providing a training set of n samples with m variables/attributes;
building a model for each attribute across all n samples;
allowing a percentage of the top ranking models to predict a concentration of a target material for a test spectrum; and
determining the composition of the target material based on an average prediction of said top ranking models,

The method may further comprise the steps of calculating the fitness of each model built, based on its quantification performance on the training set; and ranking the models according to their fitness. The step of building a model for each attribute may comprise: generating training data for each attribute in the first training spectrum; repeating step a) for each training spectrum in the training set; and using the training data generated from each training spectrum to build a model for each attribute.

The step of generating training data of each attribute may comprise calculating: its value; its aspect, where its aspect is its position in relation to the surrounding spectrum; and its class value (concentration) of the training spectrum. The step of calculating the aspect of an attribute may comprise the step of calculating the relationship between the value of the attribute and the value of at least one preceding or subsequent attribute.

The method of calculating the fitness of each model based on its performance on the training set may comprise the steps of: allocating an accuracy value for each spectrum in the training set; and performing a calculation on the accuracy values in a) to provide an integer fitness value for a model.

The step of allowing a percentage of the top ranking models to predict an unknown sample may comprise: determining which attribute in the training spectra each model was built build from; giving the corresponding attribute and aspect data from a test spectrum to each of the top ranking models; and using an average of top ranked models in quantification, for an unknown spectrum. The average prediction of the top ranked models may be used for quantification.

The step of determining the composition of the target material may further comprise basing this determination on an average prediction in quantification.

It will be appreciated that any of the methods of the invention may be computer controlled. Accordingly, the invention further provides a computer-readable medium having stored thereon computer executable instructions for performing any of the aforementioned methods of the invention.

The disclosure further provides a detector having stored thereon computer executable instructions for performing any of the aforementioned methods of the invention. The detector is preferably portable for use in the field, however a non-portable detector may alternatively be provided. It will be appreciated that a single detector may be capable of performing all of the aforementioned methods.

A detector according to the disclosure may comprise:

a processor operable for performing any of the aforementioned methods,
a storage device for storing at least one model,
means for receiving at least one sample of a target material,
means for providing a user output.

It will be appreciated that the detector may be operable for performing both the aforementioned method of classifying a test spectrum of a target material and the aforementioned method of quantifying a test spectrum of a target material The detector preferably further comprises means for storing training data for use in building the models. The training data may be stored only temporarily until a model is build at which time only the model is stored. The detector may further comprise means for replacing a model stored in the storage device with an alternative model, such as an updated model. It will be appreciated that an existing model may be updated with another model built using different or more expansive data.

The invention provides a meta-learning 'wrapper' approach named "Spectral Attribute Voting" (SAV) that can be used in conjunction with any standard classification or regression technique.

In essence, the contribution of this system is that it modifies existing techniques for data analysis, to improve on them in several ways. The invention provides a new way of visualising the results of analysis that has not previously been done in ensemble-based analysis methods. When provided with data generated from spectral analysis (for example, Raman or Infra-Red Spectroscopy) from multiple samples of materials, the method of the invention produces a compact summary of key aspects of the data so that it may be used efficiently for purposes such as classification, quantification, and visualisation.

An advantage of the invention is that the points given greatest importance in the classification/regression process are presented in a way that is meaningful to experts in the domain, so that experts get insight into why specific decisions are made by the system. It also provides a method for validating the decision process. This is an improvement on existing patents in this area that employ a classification process, such as Neural Networks (US 5,946,640) or Support Vector Machines (US6,427,141).

The first stage of the method of the invention is to build a model for each attribute in a dataset.

Generation of training data for the first attribute is as follows. Using a first training spectrum, training data is generated for the first attribute using the value and aspect of the attribute, where aspect is its position in relation to the surrounding spectrum. The aspect data for the first attribute is calculated as the difference between the value of the first attribute and the value of a number of attributes before and after the first attribute.

Aspect data is used together with the value of the first attribute and the class value (presence/absence) for classification tasks, or concentration for quantification tasks, of the training spectrum to produce training data for the first attribute on the first training spectrum. The above process is then repeated using the 2nd and each subsequent training spectrum to produce training data to build a model for the first attribute in the dataset. The above training data generation process is repeated for the second attribute, producing a model based on the second attribute of the training spectra. A different model is built for each or some of the attributes in the training set.

The second stage calculates the fitness of each model (i.e. how well it learnt) and ranks all the models based on their performance (their fitness).

Classification tasks

The third stage is to choose a percentage of the top performing models to vote on the class of an unknown sample. The fourth stage is to weight each model's vote by its classification accuracy on the training set. Each model's vote is multiplied by its fitness. The majority vote of the chosen percentage of models is the classification result of future test samples.

Quantification tasks

The third stage is to choose a percentage of the top performing models. Each model chosen will predict a concentration for a test spectrum and the average is the final Spectral Attribute Voting result.

Noise and high dimensionality are two major obstacles to Raman spectral classification and quantification. SAV employs a systematic procedure for feature selection and noise reduction. A major advantage of SAV is that important features are preserved in the final decision and this overcomes the problem of interpretability in spectral classification while still retaining accuracy.

## Brief Description of the Drawings

Embodiments of the invention will be described, by way of example only, with reference to the accompanying drawings, in which:

Figure 1 is a schematic representation of generating a model for one attribute.
Figure 2 is a schematic representation of creating an SAV ensemble.
Figure 3 is a schematic representation of classifying a new spectrum using the system.
Figure 4 is the Raman spectrum of pure 1,1,1-trichloroethane showing data points used with Ripper (a classification algorithm in the prior art).
Figure 5 is the Raman spectrum of pure acetone showing data points used with an ANN.
Figure 6 is the Raman spectrum of pure acetonitrile showing the data points used with C4.5.
Figure 7 is the Raman spectrum of a mixture of 20% chloroform and 80% acetone sample showing data points used with k-nearest neighbour for quantification of chloroform.
Figure 8 is a representation of a system for determining the presence of a known substance in an unknown sample in accordance with an embodiment of the invention.

## Detailed Description of the Drawings

This description reflects a single embodiment of the invention. However, other methods of computing performance, rank, fitness etc, could be substituted without affecting the claims of the invention.

The invention classifies spectra using an ensemble of machine learning models. A model is generated for a number of attributes (spectral data points) in the dataset and those models that best classify or quantify the training data are selected to classify or quantify validation samples. Figure 1 shows a diagrammatic representation of model generation for one attribute. The training data for an attribute on which a model is built is generated using the value and aspect of an attribute in each of the training spectra.

The aspect of an attribute is calculated, for a given spectrum as the difference between the value of the attribute in the spectrum and the value of several of attributes before and after are calculated. (The precise number of attributes will depend on the application.) The value of the attribute in the spectrum and the class value (presence/absence for classification of Raman spectral data and concentration for quantification of Raman spectral data) of the training spectrum are also used to generate the training data for an attribute. This procedure is repeated for all the spectra in the training set and a model is generated for the attribute.

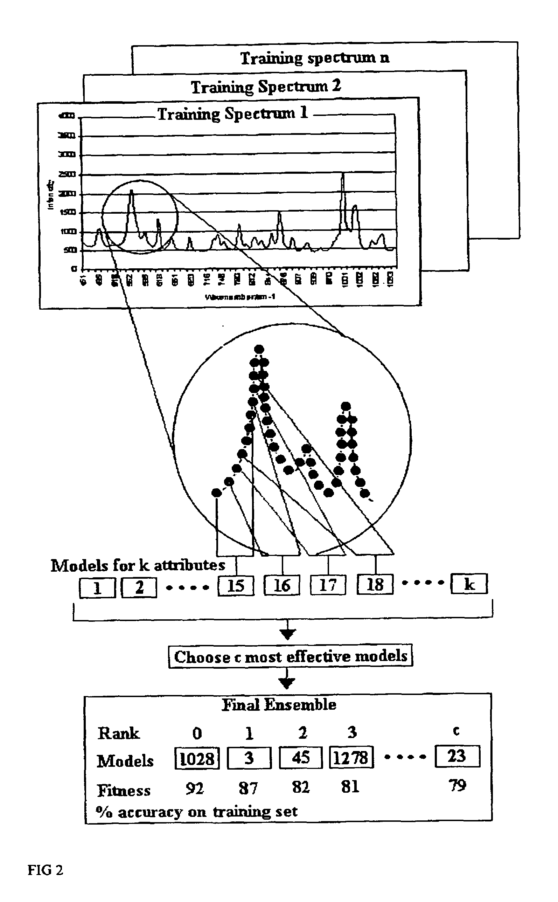

This is repeated for all or some of the attributes in the dataset producing a separate model for each or certain attributes. This is illustrated in Figure 2.

Classification tasks

A percentage of the most accurate models are then chosen to vote and each model's vote is weighted by its classification accuracy on the training set. The majority vote of this chosen percentage is the classification result of future test samples.

When SAV is to be used for classification, the primary goal of each classification model (M) based on an attribute (i) is, of course, to be able to classify all training spectra (S) correctly. Therefore the fitness $F(M_{(i)})$ of a model (for example expressed as a percentage) is required to be defined in terms classification performance on the training data. This is calculated as:

$$F(M_{(i)}) = \sum_{p=0}^{n} Acc(M_{(i)}S_{(p)}) \qquad (1)$$

where $Acc(M_{(i)}S_{(p)})$ is the classification accuracy of the model $M_{(i)}$ on the spectrum $S_{(p)}$ and n is the number of training cases. Thus, a score of 1 is given for each correctly classified spectrum, and a score of 0 is given for each incorrectly classified one.

Each model is sorted based on fitness and some quantity of the fittest models (depending on the application) form the final ensemble.

Equation 2 is used classify a test spectrum

$$Class = \sum_{i=0}^{c} F(M_{(i)}) * Acc(M_{(i)}S_{(t)}) \qquad (2)$$

Where $Acc(M_{(i)}S_{(t)})$ is the classification of the test spectrum $S_{(t)}$ by the model $M_{(i)}$, c is the number of models to vote. A value of 1 is given to $Vote(M_{(i)}S_{(t)})$ for each model that classifies the target analyte as present in the test spectrum and a value of -1 is given for each model that classifies the solvent as absent. It should be noted that each model predicts a unknown sample based only on the value and aspect of the attribute on the validation sample that correspond to the attribute and aspect on which the model was built. Each model's vote is weighted by its performance on the training spectra. The actual classification of the test spectrum is carried out as follows:

$$Class \geq 0 \Rightarrow present$$
$$Class < 0 \Rightarrow absent \qquad (3)$$

The procedure for classification of a new spectrum is illustrated diagrammatically in Figure 3.

Quantification tasks

If SAV is to be used for quantification, the fitness $F(M_{(i)})$ of a model generated may be described as :

$$F(M_{(i)}) = \sqrt{\frac{1}{n} \sum_{p=0}^{n} (P(M_{(i)}S_{(p)}) - T(S_{(p)}))^2} \qquad (4)$$

Where $P(M_{(i)}S_{(p)})$ is the value predicted for training sample spectrum p by the model $M_{(i)}$ and $T(S_{(p)})$ is the target value for training sample spectrum p. Once training is complete a model has been generated for each attribute.
Each model is sorted based on fitness and some quantity of the fittest models (depending on the application) form the final ensemble.
Equation 5 is used quantify a validation spectrum

$$Concentration = \frac{\sum_{i<0}^{c} Conc(M_{(i)}S_{(t)})}{c} \qquad (5)$$

Where $Conc(M_{(i)}S_{(t)})$ is the quantification of the test spectrum $S_{(t)}$ by the model $M_{(i)}$ and c is the number of top models to vote. Equation 5 is the average prediction of the top c models on a test spectrum.

Visualisation Demonstration

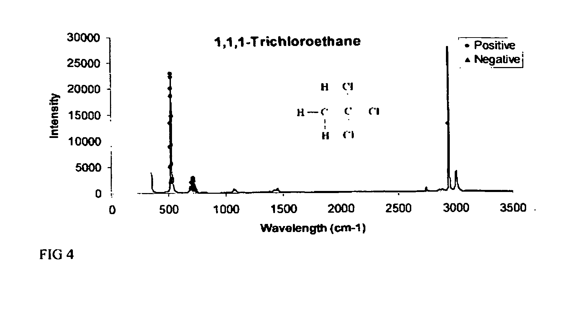

Figures 4 to 7 show examples of the visualisation aspect of the Spectral Attribute Voting method of an embodiment of the invention. With reference to Figure 4, this example investigates the use of an embodiment of the method of the invention in identifying chlorinated solvents in mixtures from their Raman spectra. The chlorinated solvents under investigation are 1,1,1-trichloroethane, chloroform and dichloromethane. The dataset on which this example was based contained 230 spectra made up of mixtures of various solvents. In Figure 4 the points chosen by the method of the embodiment for 1,1,1-trichloroethane using a machine learning method called Ripper tend to focus principally on a large peak at 520 cm$^{-1}$ and a smaller peak at 720 cm$^{-1}$. The 520 cm$^{-1}$ band is the C-Cl stretch vibration and would be expected to be the primary discriminator. The large peak at 3000 cm$^{-1}$ is largely ignored as this area corresponds to the C-H bond region of the spectrum, which is less helpful in classification as all of the solvents contain C-H bonds. It is also interesting that a number of points on the small peak at 720 cm$^{-1}$ incorrectly classify the spectrum.

In order to further demonstrate the advantage of using an embodiment of the method of the invention in conjunction with ML techniques for classification of Raman spectra, two non-chlorinated solvents, acetone and acetonitrile, were investigated.

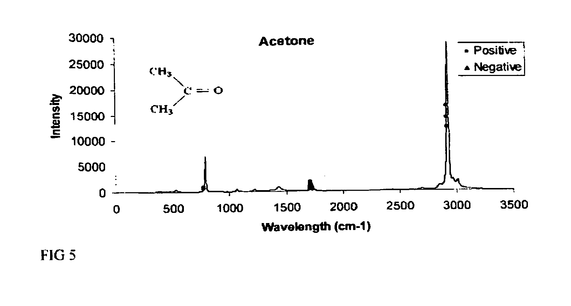

Figure 5 shows the Raman spectrum of pure acetone, its structure and points chosen by SAV in conjunction with a neural network for the classification of acetone. The peak around 1700 cm$^{-1}$ in acetone corresponds to the presence of a C=O functional group, which is common to only two of the other solvents in the dataset (ethyl acetate and dimethylformamide).

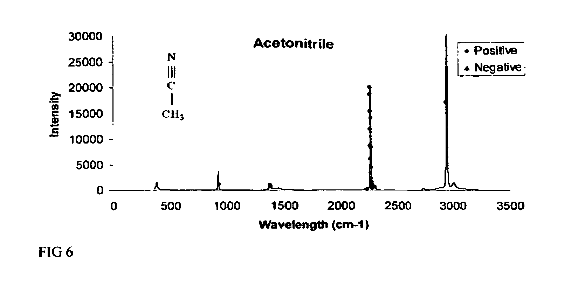

Similarly, acetonitrile was classified using mostly points around a peak at 2255 cm$^{-1}$, see Figure 6. This corresponds to the presence of a C≡N bond in acetonitrile, which is not present in any of the other solvents. All the points used by the method of the embodiment of the invention for classification of acetone and acetonitrile correctly classified the pure solvents.

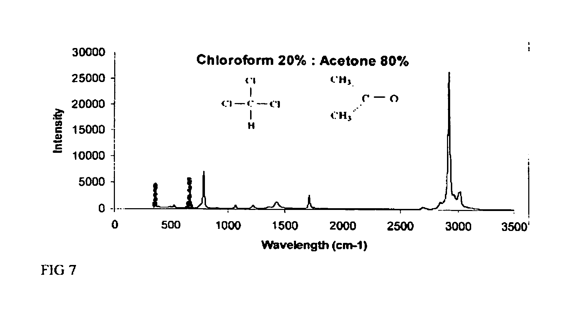

The method of the embodiment does not decrease the efficacy of ML techniques when applied to quantification tasks and as shown in Figure 7 offers the benefit of increased understanding of decisions made. The points chosen by k-nearest neighbour with attribute voting for the quantification of chloroform are concentrated in the section of the spectrum corresponding to the C-Cl bond and as would be expected ignore the peaks at 790 cm$^{-1}$ and 1700 cm$^{-1}$ which are particular to acetone.

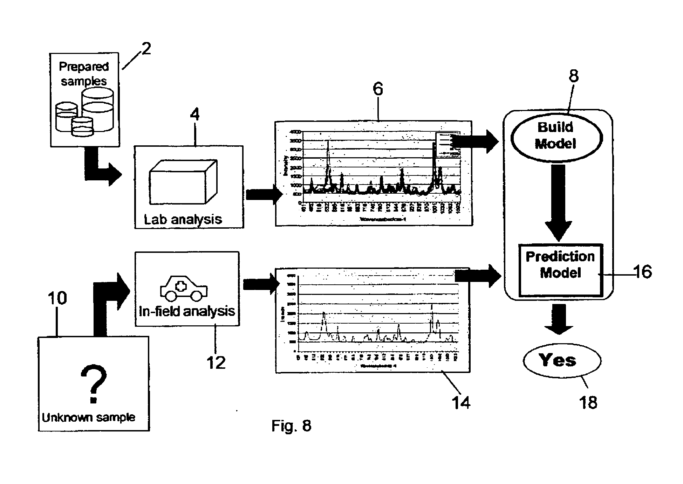

Figure 8 is a representation of a system for determining the presence of a known substance in an unknown sample in accordance with an embodiment of the invention. Prepared samples 2 of a known substance, for example cocaine, are used in a lab analysis 4 to generate training data in the form of sample spectra 6. The training data is used to build 8 an SAV model. When an unknown sample 10 is provided, in-field spectral analysis 12 is carried out, for example by law enforcement officers, to generate a spectrum 14 for the unknown sample 6. The SAV model 16 is then provided spectral data from the unknown sample spectrum 14 to predict whether there is any of the known substance (e.g. cocaine) in the unknown sample. In the example shown, cocaine is found to be present in decision step 12.

It will be appreciated that an embodiment of the present invention provides a novel ensemble technique, specifically designed for spectral analysis. The training step of SAV involves the automatic generation of a separate prediction model for a number of spectral wavelengths in the training set of spectra (assuming that all training spectra have been aligned to the same set of wavelengths). In the prediction step, an unknown spectrum is evaluated by each attribute model, i.e. each model votes independently, resulting in a set of N predictions, where N is the number of spectral wavelengths. These N predictions are combined in a special way (weighted by model fitness over the training set) to arrive at a final prediction.

When SAV is applied to a classification task (i.e. a task where the objective is to predict the category), each separate prediction model makes a prediction about the category, and all of these predictions are combined in the weighting process, to arrive at a final prediction.

One benefit of the use of an ensemble of multiple attribute models is that it leads to a more robust performance, as demonstrated by experimental evaluations.

Another key benefit of the use of N spectral attribute models in the SAV ensemble of the embodiment of the present invention is that they have been shown to generate useful visualisations based on the fitness of each model for a particular prediction problem. Such a visualisation informs experts which wavelengths are important for the identification/ quantification of a particular target analyte. Furthermore, SAV represents a novel approach to the assigning of scores to wavelengths of a spectrum for a particular target (because it is based on individual prediction models).

SAV according to the embodiment of the present invention can be used for both the classification and quantification of a target analyte in a mixture. The present invention allows for the specific identification or quantification of a target analyte in complex mixtures, based on spectral data.

SAV in many cases improves classification and regression accuracy for ML techniques and increased the clarity of machine learning decision-making processes in relation to spectroscopic analysis. This is very important in real world practical applications of ML techniques, as troubleshooting misclassifications by 'black box' techniques is difficult. The method of the invention allows for decisions to be made which take both human and machine opinion into account and the points chosen are informative when viewed in conjunction with the chemical structure of the compound whose presence is being investigated.

It will be appreciated that the present invention may be applied to other types of data other than spectroscopic data. Examples include univariate data sequences in general such as acoustic data or seismic data.

The words "comprises/comprising" and the words "having/including" when used herein with reference to the present invention are used to specify the presence of stated features, integers, steps or components but does not preclude the presence or addition of one or more other features, integers, steps, components or groups thereof.

**Claims**

1. A method of generating models with which to classify or quantify spectra of unknown samples and unknown mixtures of compounds to permit the specific identification or quantification of a target analyte in complex mixtures based on spectral data, the method comprising the steps of:

    providing a training set of training spectra, each spectrum representing a known substance or mixture of known compounds and each spectrum having a plurality of spectral attributes, each attribute representing a spectral data point and each attribute being at a different wavelength;
    choosing a plurality of said different wavelengths;
    determining at least the value of the spectral attribute indicating the intensity at each chosen wavelength in each training spectrum in the training set; and
    building a plurality of models, wherein each model is for one of said spectral attributes and is built by correlating the determined values in the training set of training spectra of said attribute value at the chosen wavelength of said spectral attribute with the classification or quantification of said training spectra , and
    selecting a plurality of models with which to classify or quantify spectra of unknown samples or mixtures of compounds by selecting a percentage of the plurality of models which most accurately classified or quantified the training set upon which they were built.

2. The method of claim 1 further comprising:

    determining the aspect of the spectral attribute at each chosen wavelength in each training spectrum in the training set, where the aspect of each attribute is its position in relation to the surrounding spectrum; and
    correlating the determined aspects at each chosen wavelength when building each model.

3. The method of Claim 2 wherein the step of determining the aspect of each attribute comprises the step of calculating the difference in value between the value of the attribute and the value of at least one preceding or subsequent attribute.

4. A method of classifying the spectrum of an unknown sample or mixture of unknown compounds comprising the steps of:

    providing a plurality of models, each model generated using the method of claim 1;
    calculating the fitness of each model based on its accuracy in classifying the training set upon which it was built;
    selecting at least one of said plurality of models to classify the spectrum of said unknown sample or mixture of unknown compounds, each model having been built using the spectral attributes at a particular wavelength from each spectrum in said training set;
    identifying which attribute in the spectrum of said unknown sample or mixture of unknown compounds has said particular wavelength, and
    inputting said identified attribute into said at least one selected model to generate a class prediction for said unknown sample or mixture of unknown compounds.

5. The method of claim 4 wherein said step of selecting at least one of said plurality of models comprises selecting a percentage of the models which most accurately classified the training set.

6. The method of claim 5 wherein said step of selecting a percentage of the models which most accurately classified the training set comprises:

    calculating the fitness of each model based on its accuracy in correctly classifying the training set;
    ranking the models according to their fitness; and
    selecting a percentage of the top ranking models.

7. The method of claim 6 wherein the method of calculating the fitness of each model comprises the steps of:

    allocating an accuracy value for each spectrum in the training set; and
    correlating said accuracy values to provide an integer fitness value for the model.

8. A method of quantifying the spectrum of an unknown sample or mixture of unknown compounds to determine concentrations therein, the method comprising the steps of:

> providing a plurality of models, each model generated using the method of claim 1;
> selecting at least one of said plurality of models to quantify the spectrum of said unknown sample or mixture of unknown compounds, said at least one model having been built using the spectral attributes at a particular wavelength from each spectrum in said training set;
> identifying which attribute in the spectrum of said unknown sample or mixture of unknown compounds has said particular wavelength; and
> inputting said identified attribute into said at least one selected model to generate a concentration prediction for said unknown sample or mixture of unknown compounds.

9. The method of claim 8 wherein said step of selecting at least one of said plurality of models comprises selecting a percentage of the models which most accurately quantified the training set.

10. The method of claim 9 wherein said step of selecting a percentage of the models which most accurately quantified the training set comprises:

> calculating the fitness of each model based on its accuracy in correctly quantifying the training set;
> ranking the models according to their fitness; and
> selecting a percentage of the top ranking models.

11. The method of claim 10 wherein the method of calculating the fitness of each model comprises the steps of:

> allocating an accuracy value for each spectrum in the training set; and
> correlating said accuracy values to provide an integer fitness value for the model.

12. The method of any of claims 8 to 11 wherein said step of generating a concentration prediction for said unknown sample or mixture of unknown compounds comprises calculating the mean average of the concentration predictions from each of said at least one selected models.

13. A system for generating models with which to classify or quantify spectra of unknown samples and unknown mixtures of compounds, comprising:

> a storage device for storing a training set of training spectra (6), each spectrum representing a known substance or a mixture of known compounds and each spectrum having a plurality of spectral attributes, each attribute representing a spectral data point and each attribute being at a different wavelength, and
> a processor operable for:
>
> > providing a training set of training spectra (6),
> > choosing a plurality of said different wavelengths,
> > determining at least the value of the spectral attribute indicating the intensity at each chosen wavelength in each training spectrum in the training set,
> > building a plurality of models (16), wherein each model is for one of said spectral attributes and is built by correlating the determined values in the training set of training spectra of said attribute value at the chosen wavelength of said attribute with the classification of quantification of said training spectra, and
> > selecting a plurality of models with which to classify or quantify spectra of unknown samples (10) and unknown mixtures of compounds by selecting a percentage of the plurality of models which most accurately classified or quantified the training set upon which they were built.

14. A system for classifying the spectrum of an unknown samples or mixture of unknown compounds comprising:

> means for providing a plurality of models, each model generated using the method of claim 1;
> means for calculating the fitness of each model based on its accuracy in classifying the training set upon which it was built;
> means for selecting at least one of said plurality of models to quantify the spectrum of said unknown samples or mixture of unknown compounds, said at least one model having been built using the spectral attributes at a particular wavelength from each spectrum in said training set;
> means for identifying which attribute in the spectrum of said unknown sample or mixture of unknown compounds has said particular wavelength; and
means for inputting said identified attribute into said at least one selected model to generate a concentration prediction for said unknown sample or mixture of unknown compounds.

15. A system for quantifying the spectrum of a unknown sample or mixture of unknown compounds to determine concentrations therein, comprising:

means for providing a plurality of models, each model generated using the method of claim 1;
means for selecting at least one of said plurality of models to quantify the spectrum of said unknown sample or mixture of unknown compounds, said at least one model having been built using the spectral attributes at a particular wavelength from each spectrum in said training set;
means for identifying which attribute in the spectrum of said unknown sample or mixture of unknown compounds has said particular wavelength; and
means for inputting said identified attribute into said at least one selected model to generate a concentration prediction for said unknown sample or mixture of unknown compounds.

16. A computer-readable medium having stored thereon computer executable instructions for performing the method of any of claims 1 to 12.

**Patentansprüche**

1. Verfahren zur Erzeugung von Modellen, mit denen man Spektren von unbekannten Proben und unbekannten Gemischen von Verbindungen klassifizieren oder quantifizieren kann, um dadurch die spezifische Identifizierung oder Quantifizierung eines Zielanalyten in komplexen Gemischen auf der Grundlage von Spektraldaten zu ermöglichen, wobei das Verfahren die Schritte umfasst:

Bereitstellen einer Übungsgruppe von Übungsspektren, wobei jedes Spektrum eine bekannte Substanz oder ein Gemisch von bekannten Verbindungen repräsentiert und jedes Spektrum eine Vielzahl von spektralen Attributen aufweist, wobei jedes Attribut einen spektralen Datenpunkt repräsentiert und sich jedes Attribut bei einer anderen Wellenlänge befindet;
Auswählen einer Vielzahl der verschiedenen Wellenlängen;
Bestimmen wenigstens des Werts des spektralen Attributs, das die Intensität bei jeder ausgewählten Wellenlänge in jedem Übungsspektrum in der Übungsgruppe anzeigt; und
Konstruieren einer Vielzahl von Modellen, wobei jedes Modell für eines der spektralen Attribute bestimmt ist und dadurch konstruiert wird, dass man die bestimmten Werte in der Übungsgruppe von Übungsspektren des Attributwerts bei der ausgewählten Wellenlänge des spektralen Attributs mit der Klassifizierung oder Quantifizierung der Übungsspektren korreliert; und
Auswählen einer Vielzahl von Modellen, mit denen man Spektren von unbekannten Proben oder Gemischen von Verbindungen klassifizieren oder quantifizieren kann, indem man einen Prozentanteil der Vielzahl von Modellen auswählt, der die Übungsgruppe, anhand derer sie konstruiert wurden, am genauesten klassifiziert oder quantifiziert hat.

2. Verfahren gemäß Anspruch 1, weiterhin umfassend:

Bestimmen des Aspekts des spektralen Attributs bei jeder ausgewählten Wellenlänge in jedem Übungsspektrum in der Übungsgruppe, wobei der Aspekt jedes Attributs seine Position in Bezug auf das umgebende Spektrum ist; und
Korrelieren der bestimmten Aspekte bei jeder ausgewählten Wellenlänge beim Konstruieren jedes Modells.

3. Verfahren gemäß Anspruch 2, wobei der Schritt des Bestimmens des Aspekts jedes Attributs den Schritt des Berechnens der Wertedifferenz zwischen dem Wert des Attributs und dem Wert wenigstens eines vorangehenden oder nachfolgenden Attributs umfasst.

4. Verfahren zum Klassifizieren des Spektrums einer unbekannten Probe oder eines Gemischs von unbekannten Verbindungen, umfassend die Schritte:

Bereitstellen einer Vielzahl von Modellen, wobei jedes Modell mit Hilfe des Verfahrens gemäß Anspruch 1 erzeugt wurde;

Berechnen der Güte jedes Modells auf der Basis seiner Genauigkeit beim Klassifizieren der Übungsgruppe, anhand derer es konstruiert wurde;

Auswählen wenigstens eines der Vielzahl von Modellen, um das Spektrum der unbekannten Probe oder des Gemischs von unbekannten Verbindungen zu klassifizieren, wobei jedes Modell unter Verwendung der spektralen Attribute bei einer bestimmten Wellenlänge aus jedem Spektrum in der Übungsgruppe konstruiert wurde;

Identifizieren des Attributs in dem Spektrum der unbekannten Probe oder des Gemischs von unbekannten Verbindungen, welches die bestimmte Wellenlänge aufweist; und

Eingeben des identifizierten Attributs in das wenigstens eine ausgewählte Modell, um eine Klassenvorhersage für die unbekannte Probe oder das Gemisch von unbekannten Verbindungen zu erzeugen.

5. Verfahren gemäß Anspruch 4, wobei der Schritt des Auswählens wenigstens eines der Vielzahl von Modellen das Auswählen eines Prozentsatzes der Modelle, die die Übungsgruppe am genauesten klassifiziert haben, umfasst.

6. Verfahren gemäß Anspruch 5, wobei der Schritt des Auswählens eines Prozentsatzes der Modelle, die die Übungsgruppe am genauesten klassifiziert haben, Folgendes umfasst:

Berechnen der Güte jedes Modells auf der Basis seiner Genauigkeit beim genauen Klassifizieren der Übungsgruppe;

Bringen der Modelle in eine Rangfolge gemäß ihrer Güte; und

Auswählens eines Prozentsatzes der ranghöchsten Modelle.

7. Verfahren gemäß Anspruch 6, wobei das Verfahren des Berechnens der Güte jedes Modells die Schritte umfasst:

Zuordnen eines Genauigkeitswerts zu jedem Spektrum in der Übungsgruppe; und

Korrelieren der Genauigkeitswerte, wobei man einen ganzzahligen Gütewert für das Modell erhält.

8. Verfahren zum Quantifizieren des Spektrums einer unbekannten Probe oder eines Gemischs von unbekannten Verbindungen, um Konzentrationen darin zu bestimmen, wobei das Verfahren die Schritte umfasst:

Bereitstellen einer Vielzahl von Modellen, wobei jedes Modell mit Hilfe des Verfahrens gemäß Anspruch 1 erzeugt wurde;

Auswählen wenigstens eines der Vielzahl von Modellen, um das Spektrum der unbekannten Probe oder des Gemischs von unbekannten Verbindungen zu quantifizieren, wobei das wenigstens eine Modell unter Verwendung der spektralen Attribute bei einer bestimmten Wellenlänge aus jedem Spektrum in der Übungsgruppe konstruiert wurde;

Identifizieren des Attributs in dem Spektrum der unbekannten Probe oder des Gemischs von unbekannten Verbindungen, welches die bestimmte Wellenlänge aufweist; und

Eingeben des identifizierten Attributs in das wenigstens eine ausgewählte Modell, um eine Konzentrationsvorhersage für die unbekannte Probe oder das Gemisch von unbekannten Verbindungen zu erzeugen.

9. Verfahren gemäß Anspruch 8, wobei der Schritt des Auswählens wenigstens eines der Vielzahl von Modellen das Auswählen eines Prozentsatzes der Modelle, die die Übungsgruppe am genauesten quantifiziert haben, umfasst.

10. Verfahren gemäß Anspruch 9, wobei der Schritt des Auswählens eines Prozentsatzes der Modelle, die die Übungsgruppe am genauesten quantifiziert haben, Folgendes umfasst:

Berechnen der Güte jedes Modells auf der Basis seiner Genauigkeit beim genauen Quantifizieren der Übungsgruppe;

Bringen der Modelle in eine Rangfolge gemäß ihrer Güte; und

Auswählens eines Prozentsatzes der ranghöchsten Modelle.

11. Verfahren gemäß Anspruch 10, wobei das Verfahren des Berechnens der Güte jedes Modells die Schritte umfasst:

Zuordnen eines Genauigkeitswerts zu jedem Spektrum in der Übungsgruppe; und

Korrelieren der Genauigkeitswerte, wobei man einen ganzzahligen Gütewert für das Modell erhält.

12. Verfahren gemäß einem der Ansprüche 8 bis 11, wobei der Schritt des Erzeugens einer Konzentrationsvorhersage für die unbekannte Probe oder das Gemisch von unbekannten Verbindungen das Berechnen des Mittelwerts der Konzentrationsvorhersagen anhand jeweils des wenigstens einen ausgewählten Modells umfasst.

13. System zur Erzeugung von Modellen, mit denen man Spektren von unbekannten Proben und unbekannten Gemischen von Verbindungen klassifizieren oder quantifizieren kann, umfassend:

eine Speichervorrichtung zum Speichern einer Übungsgruppe von Übungsspektren (6), wobei jedes Spektrum eine bekannte Substanz oder ein Gemisch von bekannten Verbindungen repräsentiert und jedes Spektrum eine Vielzahl von spektralen Attributen aufweist, wobei jedes Attribut einen spektralen Datenpunkt repräsentiert und sich jedes Attribut bei einer anderen Wellenlänge befindet; und
einen Prozessor, der betrieben werden kann zum:

Bereitstellen einer Übungsgruppe von Übungsspektren (6);
Auswählen einer Vielzahl der verschiedenen Wellenlängen;
Bestimmen wenigstens des Werts des spektralen Attributs, das die Intensität bei jeder ausgewählten Wellenlänge in jedem Übungsspektrum in der Übungsgruppe anzeigt;
Konstruieren einer Vielzahl von Modellen (16), wobei jedes Modell für eines der spektralen Attribute bestimmt ist und dadurch konstruiert wird, dass man die bestimmten Werte in der Übungsgruppe von Übungsspektren des Attributwerts bei der ausgewählten Wellenlänge des Attributs mit der Klassifizierung oder Quantifizierung der Übungsspektren korreliert; und
Auswählen einer Vielzahl von Modellen, mit denen man Spektren von unbekannten Proben (10) oder Gemischen von Verbindungen klassifizieren oder quantifizieren kann, indem man einen Prozentanteil der Vielzahl von Modellen auswählt, der die Übungsgruppe, anhand derer sie konstruiert wurden, am genauesten klassifiziert oder quantifiziert hat.

14. System zum Klassifizieren des Spektrums einer unbekannten Probe oder eines Gemischs von unbekannten Verbindungen, umfassend:

Mittel zum Bereitstellen einer Vielzahl von Modellen, wobei jedes Modell mit Hilfe des Verfahrens gemäß Anspruch 1 erzeugt wurde;
Mittel zum Berechnen der Güte jedes Modells auf der Basis seiner Genauigkeit beim Klassifizieren der Übungsgruppe, anhand derer es konstruiert wurde;
Mittel zum Auswählen wenigstens eines der Vielzahl von Modellen, um das Spektrum der unbekannten Probe oder des Gemischs von unbekannten Verbindungen zu klassifizieren, wobei jedes Modell unter Verwendung der spektralen Attribute bei einer bestimmten Wellenlänge aus jedem Spektrum in der Übungsgruppe konstruiert wurde;
Mittel zum Identifizieren des Attributs in dem Spektrum der unbekannten Probe oder des Gemischs von unbekannten Verbindungen, welches die bestimmte Wellenlänge aufweist; und
Mittel zum Eingeben des identifizierten Attributs in das wenigstens eine ausgewählte Modell, um eine Klassenvorhersage für die unbekannte Probe oder das Gemisch von unbekannten Verbindungen zu erzeugen.

15. System zum Quantifizieren des Spektrums einer unbekannten Probe oder eines Gemischs von unbekannten Verbindungen, um Konzentrationen darin zu bestimmen, umfassend:

Mittel zum Bereitstellen einer Vielzahl von Modellen, wobei jedes Modell mit Hilfe des Verfahrens gemäß Anspruch 1 erzeugt wurde;
Mittel zum Auswählen wenigstens eines der Vielzahl von Modellen, um das Spektrum der unbekannten Probe oder des Gemischs von unbekannten Verbindungen zu quantifizieren, wobei jedes Modell unter Verwendung der spektralen Attribute bei einer bestimmten Wellenlänge aus jedem Spektrum in der Übungsgruppe konstruiert wurde;
Mittel zum Identifizieren des Attributs in dem Spektrum der unbekannten Probe oder des Gemischs von unbekannten Verbindungen, welches die bestimmte Wellenlänge aufweist; und
Mittel zum Eingeben des identifizierten Attributs in das wenigstens eine ausgewählte Modell, um eine Konzentrationsvorhersage für die unbekannte Probe oder das Gemisch von unbekannten Verbindungen zu erzeugen.

16. Computerlesbares Medium, auf dem mit einem Computer ausführbare Anweisungen zum Durchführen des Verfahrens gemäß einem der Ansprüche 1 bis 12 gespeichert sind.

**Revendications**

1. Procédé de génération de modèles au moyen desquels classifier ou quantifier des spectres d'échantillons inconnus et de mélanges de composés inconnus pour permettre l'identification ou la quantification spécifique d'un analyte cible dans des mélanges complexes en fonction de données spectrales, le procédé comprenant les étapes consistant à :

   fournir un ensemble d'apprentissage constitué de spectres d'apprentissage, chaque spectre représentant une substance connue ou un mélange de composés connus et chaque spectre ayant une pluralité d'attributs spectraux, chaque attribut représentant un point de donnée spectral et chaque attribut étant à une longueur d'onde différente ;
   choisir une pluralité desdites différentes longueurs d'onde ;
   déterminer au moins la valeur de l'attribut spectral indiquant l'intensité à chaque longueur d'onde choisie dans chaque spectre d'apprentissage de l'ensemble d'apprentissage ; et
   construire une pluralité de modèles, où chaque modèle concerne l'un desdits attributs spectraux et est construit par corrélation des valeurs déterminées dans l'ensemble de spectres d'apprentissage de ladite valeur d'attribut à la longueur d'onde choisie dudit attribut spectral avec la classification ou la quantification desdits spectres d'apprentissage ; et
   sélectionner une pluralité de modèles au moyen desquels classifier ou quantifier des spectres d'échantillons ou de mélanges de composés inconnus en sélectionnant un pourcentage de la pluralité de modèles ayant classifié ou quantifié le plus précisément l'ensemble d'apprentissage sur lequel ils ont été construits.

2. Procédé selon la revendication 1, comprenant en outre les étapes consistant à :

   déterminer l'aspect de l'attribut spectral à chaque longueur d'onde choisie dans chaque spectre d'apprentissage de l'ensemble d'apprentissage, où l'aspect de chaque attribut est sa position par rapport au spectre environnant ; et
   corréler les aspects déterminés à chaque longueur d'onde choisie lors de la construction de chaque modèle.

3. Procédé selon la revendication 2, dans lequel l'étape de détermination de l'aspect de chaque attribut comprend l'étape consistant à calculer la différence de valeur entre la valeur de l'attribut et la valeur d'au moins un attribut précédent ou suivant.

4. Procédé de classification du spectre d'un échantillon inconnu ou d'un mélange de composés inconnus, comprenant les étapes consistant à :

   fournir une pluralité de modèles, chaque modèle étant généré à l'aide du procédé de la revendication 1 ;
   calculer l'adéquation de chaque modèle en fonction de sa précision à classifier l'ensemble d'apprentissage sur lequel il a été construit ;
   sélectionner au moins l'un de ladite pluralité de modèles pour classifier le spectre dudit échantillon inconnu ou mélange de composés inconnus, chaque modèle ayant été construit à l'aide des attributs spectraux à une longueur d'onde particulière de chaque spectre dudit ensemble d'apprentissage ;
   identifier l'attribut du spectre dudit échantillon inconnu ou mélange de composés inconnus qui a ladite longueur d'onde particulière ; et
   introduire ledit attribut identifié dans ledit au moins un modèle sélectionné pour générer une prédiction de classe pour ledit échantillon inconnu ou mélange de composés inconnus.

5. Procédé selon la revendication 4, dans lequel ladite étape de sélection d'au moins l'un de ladite pluralité de modèles comprend l'étape consistant à sélectionner un pourcentage des modèles ayant classifié le plus précisément l'ensemble d'apprentissage.

6. Procédé selon la revendication 5, dans lequel ladite étape de sélection d'un pourcentage des modèles ayant classifié le plus précisément l'ensemble d'apprentissage comprend les étapes consistant à :

   calculer l'adéquation de chaque modèle en fonction de sa précision à classifier correctement l'ensemble d'apprentissage ;
   classer les modèles en fonction de leur adéquation ; et
   sélectionner un pourcentage des modèles du haut du classement.

**7.** Procédé selon la revendication 6, dans lequel le procédé de calcul de l'adéquation de chaque modèle comprend les étapes consistant à :

attribuer une valeur de précision pour chaque spectre de l'ensemble d'apprentissage ; et
corréler lesdites valeurs de précision pour produire une valeur entière d'adéquation pour le modèle.

**8.** Procédé de quantification du spectre d'un échantillon inconnu ou d'un mélange de composés inconnus pour y déterminer des concentrations, le procédé comprenant les étapes consistant à :

fournir une pluralité de modèles, chaque modèle étant généré à l'aide du procédé de la revendication 1 ;
sélectionner au moins l'un de ladite pluralité de modèles pour quantifier le spectre dudit échantillon inconnu ou mélange de composés inconnus, ledit au moins un modèle ayant été construit à l'aide des attributs spectraux à une longueur d'onde particulière de chaque spectre dudit ensemble d'apprentissage ;
identifier l'attribut du spectre dudit échantillon inconnu ou mélange de composés inconnus qui a ladite longueur d'onde particulière ; et
introduire ledit attribut identifié dans ledit au moins un modèle sélectionné pour générer une prédiction de concentration pour ledit échantillon inconnu ou mélange de composés inconnus.

**9.** Procédé selon la revendication 8, dans lequel ladite étape de sélection d'au moins l'un de ladite pluralité de modèles comprend l'étape consistant à sélectionner un pourcentage des modèles ayant quantifié le plus précisément l'ensemble d'apprentissage.

**10.** Procédé selon la revendication 9, dans lequel ladite étape de sélection d'un pourcentage des modèles ayant quantifié le plus précisément l'ensemble d'apprentissage comprend les étapes consistant à :

calculer l'adéquation de chaque modèle en fonction de sa précision à quantifier correctement l'ensemble d'apprentissage ;
classer les modèles en fonction de leur adéquation ; et
sélectionner un pourcentage des modèles du haut du classement.

**11.** Procédé selon la revendication 10, dans lequel le procédé de calcul de l'adéquation de chaque modèle comprend les étapes consistant à :

attribuer une valeur de précision pour chaque spectre de l'ensemble d'apprentissage ; et
corréler lesdites valeurs de précision pour produire une valeur entière d'adéquation pour le modèle.

**12.** Procédé selon l'une quelconque des revendications 8 à 11, dans lequel ladite étape de génération d'une prédiction de concentration pour ledit échantillon inconnu ou mélange de composés inconnus comprend l'étape consistant à calculer la moyenne des prédictions de concentration à partir dudit ou de chacun desdits modèles sélectionnés.

**13.** Système pour la génération de modèles au moyen desquels classifier ou quantifier des spectres d'échantillons inconnus et de mélanges de composés inconnus, comprenant :

un dispositif de stockage pour stocker un ensemble d'apprentissage constitué de spectres d'apprentissage (6), chaque spectre représentant une substance connue ou un mélange de composés connus et chaque spectre ayant une pluralité d'attributs spectraux, chaque attribut représentant un point de donnée spectral et chaque attribut étant à une longueur d'onde différente ; et
un processeur pouvant être utilisé pour :

fournir un ensemble d'apprentissage constitué de spectres d'apprentissage (6),
choisir une pluralité desdites différentes longueurs d'onde ;
déterminer au moins la valeur de l'attribut spectral indiquant l'intensité à chaque longueur d'onde choisie dans chaque spectre d'apprentissage de l'ensemble d'apprentissage ;
construire une pluralité de modèles (16), où chaque modèle concerne l'un desdits attributs spectraux et est construit par corrélation des valeurs déterminées dans l'ensemble de spectres d'apprentissage de ladite valeur d'attribut à la longueur d'onde choisie dudit attribut avec la classification ou la quantification desdits spectres d'apprentissage ; et
sélectionner une pluralité de modèles au moyen desquels classifier ou quantifier des spectres d'échantillons

17

inconnus (10) et de mélanges de composés inconnus en sélectionnant un pourcentage de la pluralité de modèles ayant classifié ou quantifié le plus précisément l'ensemble d'apprentissage sur lequel ils ont été construits.

14. Système pour la classification du spectre d'un échantillon inconnu ou d'un mélange de composés inconnus, comprenant :

des moyens pour fournir une pluralité de modèles, chaque modèle étant généré à l'aide du procédé de la revendication 1 ;
des moyens pour calculer l'adéquation de chaque modèle en fonction de sa précision à classifier l'ensemble d'apprentissage sur lequel il a été construit ;
des moyens pour sélectionner au moins l'un de ladite pluralité de modèles pour quantifier le spectre dudit échantillon inconnu ou mélange de composés inconnus, ledit au moins un modèle ayant été construit à l'aide des attributs spectraux à une longueur d'onde particulière de chaque spectre dudit ensemble d'apprentissage ;
des moyens pour identifier l'attribut du spectre dudit échantillon inconnu ou mélange de composés inconnus qui a ladite longueur d'onde particulière ; et
des moyens pour introduire ledit attribut identifié dans ledit au moins un modèle sélectionné pour générer une prédiction de concentration pour ledit échantillon inconnu ou mélange de composés inconnus.

15. Système pour la quantification du spectre d'un échantillon inconnu ou d'un mélange de composés inconnus pour y déterminer des concentrations, comprenant :

des moyens pour fournir une pluralité de modèles, chaque modèle étant généré à l'aide du procédé de la revendication 1 ;
des moyens pour sélectionner au moins l'un de ladite pluralité de modèles pour quantifier le spectre dudit échantillon inconnu ou mélange de composés inconnus, ledit au moins un modèle ayant été construit à l'aide des attributs spectraux à une longueur d'onde particulière de chaque spectre dudit ensemble d'apprentissage ;
des moyens pour identifier l'attribut du spectre dudit échantillon inconnu ou mélange de composés inconnus qui a ladite longueur d'onde particulière ; et
des moyens pour introduire ledit attribut identifié dans ledit au moins un modèle sélectionné pour générer une prédiction de concentration pour ledit échantillon inconnu ou mélange de composés inconnus.

16. Support lisible par un ordinateur, sur lequel sont stockées des instructions exécutables par ordinateur pour la mise en oeuvre du procédé selon l'une quelconque des revendications 1 à 12.

FIG 1

FIG 2

FIG 3

FIG 4

FIG 5

FIG 6

EP 2 122 332 B1

FIG 7

25

Fig. 8

## REFERENCES CITED IN THE DESCRIPTION

**Patent documents cited in the description**

- US 6675137 B
- US 5822219 A
- US 6415233 B
- US 6711503 B
- US 6096533 A
- US 5631469 A
- US 5553616 A
- US 5660181 A
- US 5900634 A
- US 5218529 A
- US 6135965 A

- US 6477516 B
- US 6421553 B
- US 6427141 B
- US 4783754 A
- US 5311445 A
- US 5435309 A
- US 5652653 A
- US 6683455 B
- US 6754543 B
- CA 2466792
- US 5946640 A